# DEMANDE DE BREVET EUROPEEN

(11) **EP 2 224 728 A1**
(43) Date de publication de la demande: **01.09.2010**
(21) Numéro de dépôt: 10154149.8
(22) Date de dépôt: 19.02.2010
(51) Int. Cl.: H04N 5/445

(54) **Procédé pour zapper d'une chaîne d'origine à une chaîne cible sur un écran d'affichage à l'aide d'un dispositif de réception télévisuel, et dispositif de réception associé**

(30) Priorité: 27.02.2009 FR 0951262
(71) Demandeur: FRANCE TELECOM, 75015 Paris (FR)
(72) Inventeur: CASTELLAN, Pierre-Yves, 35000 RENNES (FR)

(57) **Abrégé**

Le procédé comprend les étapes suivantes de:
- réception et décodage d'un flux principal de débit supérieur de la chaîne d'origine et visualisation dudit flux principal sur un écran (6) et, concomitamment, réception et décodage d'un groupe de N flux secondaires de débits inférieurs, lesdits N flux secondaires correspondant à un groupe de N chaînes respectives;
- affichage à l'écran d'une zone de navigation contenant N éléments de visualisation des N flux secondaires, ladite zone de navigation s'affichant à l'écran en même temps que le flux principal de la chaîne d'origine;
- envoi d'une demande de réception d'un flux principal de débit supérieur d'une chaîne cible dont le flux secondaire est contenu dans la zone de navigation;
- réception et décodage du flux principal de la chaîne cible;
- visualisation à l'écran (6) du flux principal de la chaîne cible, à la place du flux principal de la chaîne d'origine.

## Description

La présente invention concerne le domaine de la réception de flux de données correspondant à des programmes télévisuels.

En télévision numérique (TNT, câble, ADSL ou satellite), le nombre de chaînes télévisuels proposées aux clients a considérablement augmenté. Pour faciliter la navigation d'une chaîne à l'autre, des applications de télévision numérique proposent différents moyens pour accéder aux chaînes et naviguer d'une chaîne à l'autre.

Une manière connue pour accéder aux chaînes et naviguer d'une chaîne à l'autre repose sur un outil appelé "zappette". Il s'agit d'une liste de noms de chaînes disponibles qu'un utilisateur peut faire apparaître à l'écran, tout en regardant une chaîne. Pour faire apparaître la liste, l'utilisateur, muni d'une télécommande, appuie sur une touche spécifique de sa télécommande. Il peut ensuite faire défiler les noms des chaînes dans la "zappette", à l'aide de flèches "vers le haut" ou "vers le bas" d'un pavé de navigation de la télécommande. La "zappette" contient également un moyen de sélection d'une chaîne. Il peut s'agir d'un curseur destiné à être positionné à proximité ou sur le nom de la chaîne cible ou bien d'un cadre de sélection à l'intérieur duquel il convient de positionner le nom d'une chaîne cible. En positionnant le nom d'une chaîne cible en correspondance avec le curseur ou le cadre de sélection puis en appuyant sur une touche "ok" de la télécommande, l'utilisateur sélectionne la chaîne cible et celle-ci s'affiche à l'écran.

L'utilisation de la "zappette" pour passer d'une chaîne à une autre chaîne ne permet cependant pas à l'utilisateur de connaître au préalable (c'est-à-dire avant de changer de chaîne) de façon simple quel programme est diffusé par la chaîne cible sélectionnée.

Le document EP 2007138 décrit un procédé pour zapper d'une chaîne d'origine à une chaîne cible à l'aide d'un dispositif de réception vidéo doté d'un écran d'affichage. Le dispositif de réception affiche une vidéo en cours de diffusion par la chaîne d'origine, sur une partie principale de l'écran, et un bandeau de navigation contenant une pluralité d'éléments vidéo correspondant à une pluralité de chaînes. Le bandeau de navigation est obtenu à partir d'un même flux vidéo reçu par le dispositif et contenant les vidéos de plusieurs chaînes. Pour changer de chaîne, un utilisateur sélectionne l'élément vidéo relatif à la chaîne cible dans le bandeau de navigation. La vidéo de la chaîne cible sélectionnée s'affiche alors à la place de celle de la chaîne d'origine, à l'écran.

Ainsi, l'utilisateur qui regarde un programme sur une première chaîne peut connaître non seulement les autres chaînes disponibles mais également les programmes en cours sur ces autres chaînes, tout en continuant à regarder le programme en cours sur la première chaîne.

L'invention vise néanmoins à faciliter le zapping.

A cet effet, l'invention concerne un procédé pour zapper d'une chaîne d'origine à une chaîne cible sur un écran d'affichage à l'aide d'un dispositif de réception télévisuel, comprenant les étapes de
- réception et décodage d'un flux de données principal de débit supérieur de la chaîne d'origine et visualisation dudit flux principal sur un écran et, concomitamment, réception et décodage d'un groupe de N flux de données secondaires de débits inférieurs, lesdits N flux secondaires correspondant à un groupe de N chaînes respectives;
- affichage à l'écran d'une zone de navigation contenant N éléments de visualisation des N flux secondaires, ladite zone de navigation s'affichant à l'écran en même temps que le flux principal de la chaîne d'origine;
- déplacement relatif dans la zone de navigation des éléments de visualisation et d'un moyen de sélection, de manière à placer l'élément de visualisation du flux secondaire de la chaîne cible en correspondance avec ledit moyen de sélection.
- après que l'élément de visualisation du flux secondaire de la chaîne cible a été placé en correspondance avec le moyen de sélection, sélection d'une chaîne cible,
- envoi d'une demande de réception d'un flux principal de débit supérieur de la chaîne cible sélectionnée;
- réception et décodage du flux principal de la chaîne cible;
- visualisation à l'écran du flux principal de la chaîne cible, à la place du flux principal de la chaîne d'origine,
- et, entre l'instant de sélection de la chaîne cible et l'instant de visualisation sur l'écran du flux principal de ladite chaîne cible, agrandissement de l'élément de visualisation du flux secondaire de la chaîne cible à l'écran.

Grâce à l'invention, l'utilisateur peut dérouler la liste d'éléments de visualisation de flux secondaires des chaînes d'un bouquet de chaînes auquel il est abonné. En outre, pendant le temps de zapping, l'utilisateur peut déjà commencer à visualiser la chaîne cible sélectionnée du fait de l'agrandissement de l'élément de visualisation correspondant à la chaîne cible.L

Avantageusement, l'étape d'envoi d'une demande de réception du flux principal de la chaîne cible est exécutée dès que l'élément de visualisation du flux secondaire de ladite chaîne cible est placé en correspondance avec le moyen de sélection, avant sélection de ladite chaîne cible.

Ainsi, on anticipe la réception du flux principal de débit supérieur d'une chaîne cible potentiel, afin d'accélérer la réception de ce flux en cas de sélection effective de celui-ci.

Dans un mode de réalisation particulier, lorsque l'élément de visualisation du flux secondaire de la chaîne cible et le moyen de sélection sont placés en correspondance, il est prévu une étape d'envoi d'une demande de réception d'un flux principal de débit supérieur d'au moins une autre chaîne voisine de la chaîne cible dans la zone de navigation. Grâce à cela, on anticipe également la réception d'un ou de plusieurs flux principaux de débit supérieur de chaînes voisines de celle positionnée en correspondance avec le moyen de sélection dans la zone de navigation.

Avantageusement, après que l'élément de visualisation du flux secondaire de la chaîne cible a été placé en correspondance avec le moyen de sélection, il est prévu une étape de sélection de la chaîne cible, et, entre l'instant de sélection de la chaîne cible et l'instant de visualisation sur l'écran du flux principal de ladite chaîne cible, il est prévu une étape d'agrandissement de l'élément de visualisation du flux secondaire de la chaîne cible à l'écran.

Dans une variante de réalisation, lorsque l'élément de visualisation du flux secondaire de la chaîne cible et le moyen de sélection sont placés en correspondance, il est prévu une étape d'affichage d'une zone d'information contenant des informations de programme relative à la chaîne cible. Ainsi, l'utilisateur peut également obtenir rapidement des informations sur les programmes des autres chaînes qui s'affichent dans la zone de navigation.

L'invention concerne aussi un dispositif de réception télévisuelle adapté pour zapper d'une chaîne d'origine à une chaîne cible, comprenant
- des moyens de réception et de décodage d'un flux principal de débit supérieur d'une chaîne,
- des moyens de réception et de décodage respectivement d'un groupe de N flux secondaires de débit inférieur d'un groupe de N chaînes, agencés pour recevoir et décoder les N flux secondaires du groupe de N chaînes concomitamment à la réception et au décodage du flux principal d'une chaîne et,
- des moyens de contrôle d'affichage agencés pour commander l'affichage concomitant du flux principal de la chaîne d'origine et d'une zone de navigation contenant N éléments de visualisation des N flux secondaires sur un écran, un déplacement relatif dans la zone de navigation des éléments de visualisation et d'un moyen de sélection, de manière à placer l'élément de visualisation du flux secondaire de la chaîne cible en correspondance avec ledit moyen de sélection, la sélection d'une chaîne cible après que l'élément de visualisation du flux secondaire de la chaîne cible a été placé en correspondance avec le moyen de sélection, et, entre l'instant de sélection de la chaîne cible et l'instant de visualisation sur l'écran du flux principal de ladite chaîne cible, un agrandissement de l'élément de visualisation du flux secondaire de la chaîne cible à l'écran;
- des moyens pour, suite à l'affichage de la zone de navigation, envoyer une demande de réception d'un flux principal d'une chaîne cible sélectionnée.

L'invention sera mieux comprise à l'aide de la description suivante d'un exemple de réalisation particulier du procédé et du dispositif de zapping selon l'invention en référence aux dessins annexés sur lesquels :
- la figure 1 représente un schéma bloc fonctionnel d'un équipement d'utilisateur pour la mise en oeuvre du procédé de zapping de l'invention, selon l'exemple particulier décrit,
- les figures 2A à 2B représentent des étapes du procédé de zapping selon un mode de réalisation particulier de l'invention;
- la figure 3 représente un écran comportant une zone de navigation selon un premier exemple de réalisation de l'invention,
- la figure 4 représente un écran comportant une zone de navigation selon un deuxième exemple de réalisation de l'invention,
- la figure 5 représente un schéma bloc fonctionnel du dispositif de réception et de décodage (ci-après STB) selon un exemple particulier de réalisation de l'invention, adapter pour zapper d'une chaîne à une autre chaîne.

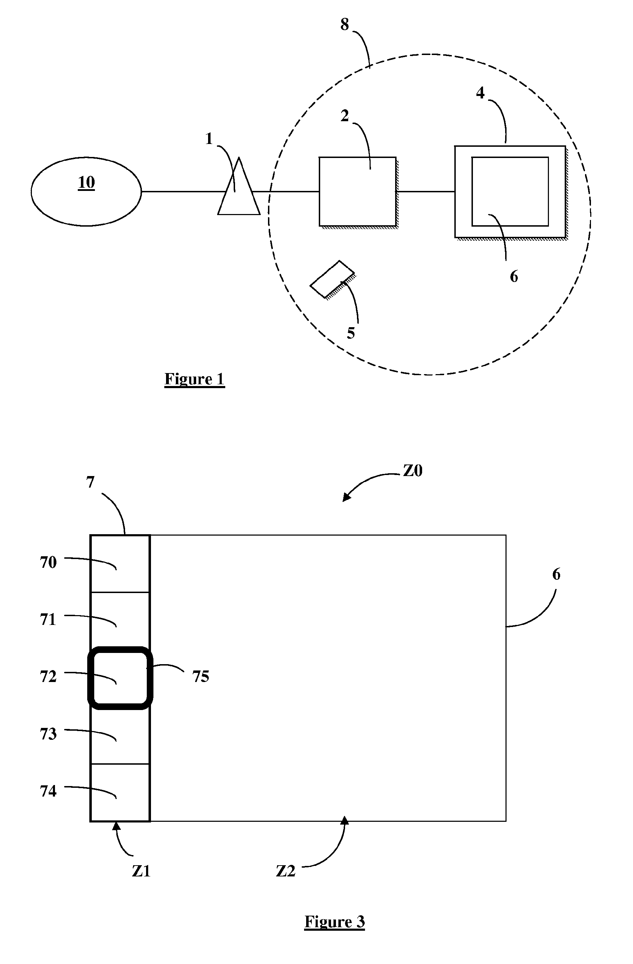

Sur la figure 1, on a représenté un équipement d'utilisateur 8 de réception et de visualisation de flux de données audiovisuels ici à travers un réseau IP 10 d'un opérateur de télécommunications, par ADSL. Les flux de données reçus comprennent ici des programmes de chaînes télévisuelles.

L'équipement d'utilisateur 8 représenté sur la figure 1 comprend un dispositif de réception et de décodage 2, que l'on appellera par la suite "Set-Top-Box" ou "STB", et un dispositif d'affichage 4 comportant un écran 6. La STB 2 est connecté au réseau IP 10 par l'intermédiaire d'une passerelle 1, par exemple une Livebox^{©}. L'équipement 8 comprend également une télécommande infrarouge 5 apte à commander à distance la STB 2.

La STB 2 intègre des moyens d'accès aux chaînes et de "zapping" (c'est-à-dire de navigation d'une chaîne à l'autre) qui seront décrit plus loin, dans la description de la STB 2.

On suppose ici que l'utilisateur de la STB 2 est abonné à un bouquet de chaînes TV, numérotées de 0 à L.

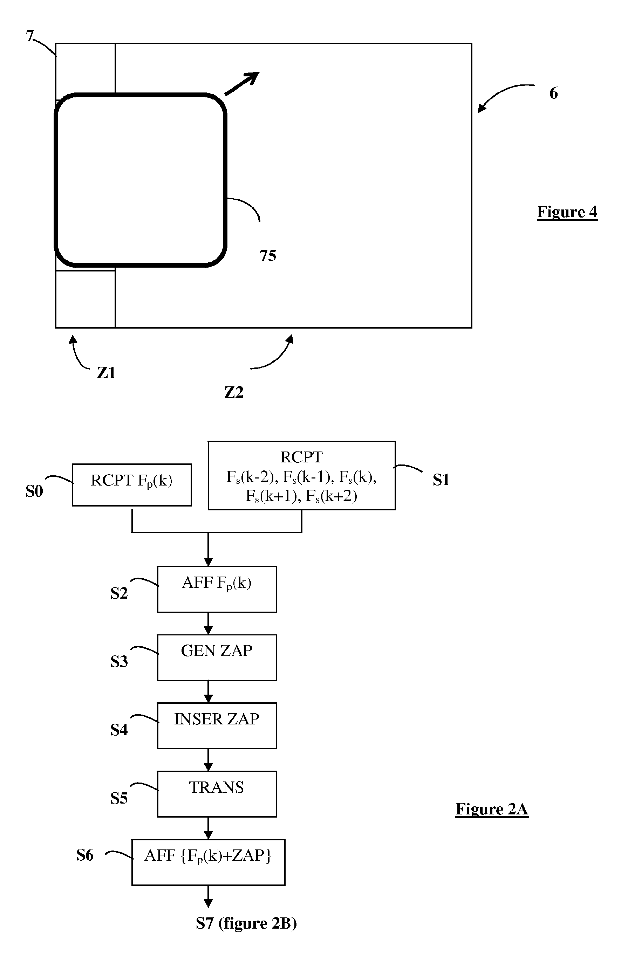

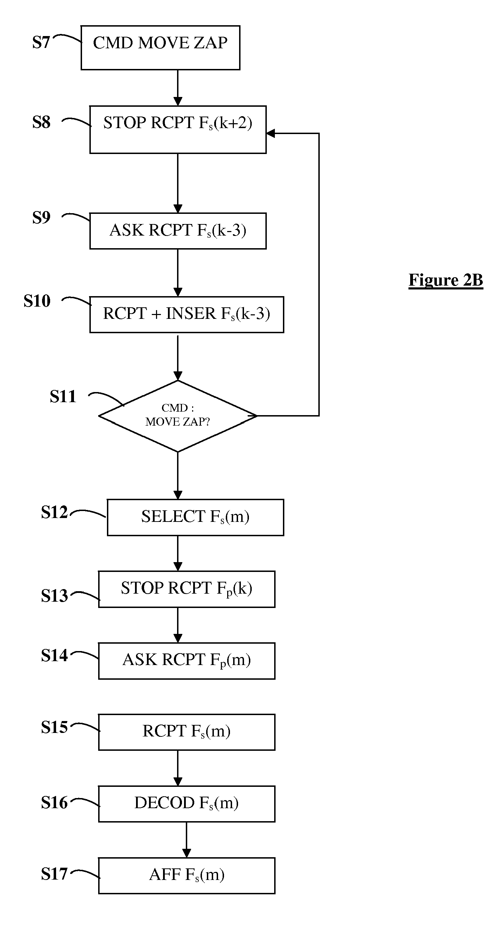

En référence aux figures 2A et 2B, on va maintenant décrire un exemple de réalisation du procédé pour zapper, ou naviguer, d'une première chaîne, dite chaîne d'origine, à une deuxième chaîne, dite chaîne cible, à l'aide de l'équipement 8 de la figure 1.

D'emblée on notera que, dans la description qui suit, on utilisera les termes "débit supérieur" et "débit inférieur" pour désigner respectivement un débit de données supérieur à un seuil de référence donné et un débit de données inférieur à ce seuil de référence. Dans l'exemple particulier de la description, le seuil de référence correspond à la limite entre le *haut débit* et le *bas débit.* Cette limite entre le *haut débit* et le *bas débit* peut varier d'un pays à l'autre. Dans l'exemple particulier de la description, le seuil de référence est fixé à 256 kilobits par seconde. Le débit supérieur peut être un haut débit, voire un très haut débit. Par convention, ce seuil de référence utilisé peut être égal à une autre valeur.

On suppose ici qu'initialement l'utilisateur regarde un programme diffusé par une première chaîne, en l'espèce la chaîne numérotée k, sur l'écran 6 du dispositif d'affichage 4. A cet effet, la STB 2 reçoit, décode et désembrouille un flux de données principal de débit supérieur de la première chaîne k, noté Fₚ(k), comprenant le programme en cours sur la chaîne k.

On note S0 l'étape comportant la suite des opérations de réception, décodage et désembrouillage du flux principal Fₚ(k) de la chaîne k par la STB 2.

Concomitamment à cette étape S0, la STB 2 reçoit, décode et désembrouille un groupe de N flux de données secondaires de débits inférieurs comprenant les programmes respectifs d'un groupe de N chaînes, lors d'une étape S1. L'étape S1 est exécutée en parallèle de l'étape S0. Dans l'exemple particulier de la description, le nombre N est égal à cinq. Lorsque l'utilisateur regarde le flux principal de la chaîne k, le groupe de N flux secondaires de débit inférieur reçus par la STB 2 correspond ici aux chaînes k-2, k-1, k, k+1, k+2. Les cinq flux secondaires des chaînes k-2, k-1, k, k+1, k+2 sont notés Fₛ(k-2), Fₛ(k-1), Fₛ(k), Fₛ(k+1), Fₛ(k+2).

Par "flux principal" et "flux secondaire" d'une chaîne donnée, on entend désigner respectivement le flux de débit supérieur et le flux de débit inférieur, comprenant tous les deux le programme en cours de la chaîne considérée. On suppose en effet ici que chaque chaîne télévisuelle transmet un programme par deux flux distincts, l'un de débit supérieur et l'autre de débit inférieur. Le flux de débit supérieur et le flux de débit inférieur d'une chaîne donnée sont tous deux transmis en multicast à travers le réseau IP 10. Ils constituent respectivement deux flux multicast distincts l'un de l'autre et utilisent pour la transmission deux couples respectifs distincts d'adresse IP et de port (logiciel). Ainsi, le flux de débit supérieur et le flux de débit inférieur d'une chaîne donnée sont accessibles soit à deux adresses IP distinctes, soit à la même adresse IP mais à deux ports distincts. Autrement dit, chaque flux multicast (de débit supérieur ou de débit inférieur) est accessible à une adresse IP et un port spécifiques.

Le flux principal Fₚ(k) de la chaîne k et les flux secondaires Fₛ(k-2), Fₛ(k-1), Fₛ(k), Fₛ(k+1), Fₛ(k+2) des chaînes k-2, k-1, k, k+1, k+2 ont été demandés, un par un, par la STB 2 lors d'une phase d'initialisation ayant précédé les étapes S0 et S1. Dans l'exemple particulier de la présente description, pour demander la réception d'un flux (c'est-à-dire s'abonner à ce flux), ou pour demander l'arrêt de la réception d'un flux (c'est-à-dire se désabonner de ce flux), la STB 2 utilise le protocole IGMP (Internet Group Management Protocol) et envoie une demande de réception, ou une demande d'arrêt de la réception, du flux considéré à un équipement du réseau 10, ici un DSLAM.

Le flux principal Fₚ(k) de débit supérieur de la chaîne k, une fois décodé et désembrouillé, est transmis au dispositif d'affichage 4 par la STB 2.

Lors d'une étape S2, le flux principal de débit supérieur Fₚ(k) de la chaîne k est visualisé, affiché, sur l'écran 6 du dispositif d'affichage 4. Le flux principal de la chaîne k visualisé s'étend dans une zone Z0 occupant la totalité ou au moins une majeure partie de l'écran 6.

On notera ici que par "visualisation d'un flux sur l'écran", on entend signifier, par abus de langage, qu'il y a visualisation du programme télévisuel correspondant à ce flux sur l'écran.

On suppose maintenant que, pendant qu'il regarde le programme de la chaîne k lors de l'étape S2, l'utilisateur commande l'affichage d'une zone de navigation 7, que l'on appellera "zappette vidéo", par appui sur une touche spécifique de la télécommande 5. Lors d'une étape S3, la zone de navigation, ou zappette vidéo, 7 est générée par la STB 2, à partir des cinq flux secondaires Fₛ(k-2), Fₛ(k-1), Fₛ(k), Fₛ(k+1), Fₛ(k+2) des chaînes k-2, k-1, k, k+1, k+2 reçus, décodés et désembrouillés, et affichée sur l'écran 6.

En référence à la figure 3, la zappette vidéo 7 a la forme d'un bandeau vertical contenant cinq éléments, ou vignettes, de visualisation des cinq flux secondaires des chaînes k-2, k-1, k, k+1, k+2, référencés 70-74. Les vignettes 70-74 sont ici de forme carrée et empilées verticalement. Bien entendu, les vignettes pourraient être de toute autre forme, rectangulaire par exemple. Elles contiennent et affichent respectivement les programmes en cours des cinq chaînes correspondantes k-2, k-1, k, k+1, k+2, en utilisant les flux secondaires de débit inférieur reçus Fₛ(k-2), Fₛ(k-1), Fₛ(k), Fₛ(k+1), Fₛ(k+2). La vignette positionnée au centre du bandeau 7 constitue une vignette de focus, susceptible d'être sélectionnée par l'utilisateur. Le bandeau 7 contient également un moyen de sélection 75, en l'espèce un cadre adapté pour entourer la vignette de focus de la zappette 7. Dans l'exemple particulier décrit ici, le cadre de sélection 75 et les vignettes peuvent être déplacées vers le haut ou vers le bas relativement au cadre de sélection 75.

La zappette vidéo générée 7 est insérée dans le signal vidéo de données destiné à être transmis au dispositif d'affichage 4 par une technique de Picture-in-Picture (Image dans Image) par la STB 2, lors d'une étape S4. Lors d'une étape S5, la STB 2 transmet le signal vidéo de sortie vers le dispositif d'affichage 4. Ce signal vidéo de sortie est un signal unique qui comprend le flux vidéo principal Fₚ(k) de la chaîne k, les flux secondaires Fₛ(k-2), Fₛ(k-1), Fₛ(k), Fₛ(k+1), Fₛ(k+2) des cinq chaînes k-2, k-1, k, k+1, k+2 et des éléments graphiques tels que le cadre de sélection (ou de focus) 75, suivant un agencement (ou disposition) tel que représenté sur la figure 3.

Lors d'une étape S6, le bandeau de navigation 7 s'affiche à l'écran 6 à l'intérieur de l'image correspondant au flux principal de la chaîne k. Autrement dit, la zappette vidéo 7 s'affiche à l'écran 6 de façon concomitante avec la visualisation du flux principal Fₚ(k) de la chaîne d'origine k, comme représenté sur la figure 3. La zappette vidéo 7 apparaît incrustée dans l'image du flux principal de la chaîne k Le flux principal Fₚ(k) de la chaîne k s'affiche dans une zone Z1 qui occupe la totalité ou la quasi-totalité de l'écran 6 alors que la zappette vidéo 7 occupe une zone partielle de l'écran 6, notée Z2, se superposant ici à l'image du flux principal Fₚ(k) de la chaîne k dans cette zone Z2.

Lors d'une étape S7, l'utilisateur commande un déplacement, ici vers le bas, des vignettes du bandeau de navigation, ou zappette, 7 en appuyant sur une flèche "vers le bas" d'un pavé de navigation de la télécommande 5. A chaque déplacement d'une longueur d'une vignette vers le bas, la STB 2
- envoie une demande d'arrêt de la réception d'un flux secondaire de débit inférieur Fₛ(k+2) de la chaîne k+2, en utilisant une commande IGMP "LEAVE", lors d'une étape S8,
- puis envoie une demande de réception d'un flux secondaire de débit inférieur supplémentaire, en l'espèce le flux secondaire de la chaîne k-3 noté Fₛ(k-3), en utilisant une commande IGMP "JOIN", lors d'une étape S9.

Suite à l'envoi de la commande IGMP "LEAVE", la STB 2 cesse de recevoir le flux secondaire de la chaîne k+2. Suite à l'envoi de la commande IGMP "JOIN", la STB 2 reçoit le flux secondaire Fₛ(k-3) de la chaîne k-3 et l'insère dans la zappette vidéo 7, lors d'une étape S10.

Après chaque déplacement d'une vignette, une étape de test S11 est réalisée afin de déterminer si une nouvelle commande de déplacement des vignettes, émise par la télécommande 5, a été reçue par la STB 2. Si le test est positif, les étapes S8 à S11 sont réitérées. Si le test est négatif, le déplacement des vignettes de la zappette vidéo 7 est interrompu.

Les étapes S8 à S11 sont ainsi réitérées à chaque commande de déplacement des vignettes vers le haut ou vers le bas, jusqu'à ce que l'utilisateur positionne la vignette contenant le flux secondaire d'une chaîne cible, en l'espèce la chaîne m, vers laquelle il souhaite basculer, en correspondance avec le cadre de sélection 75 (c'est-à-dire à l'intérieur du cadre 75, en position centrale dans la zappette).

Une fois que la vignette correspondant à la chaîne cible m est positionnée au centre de la zappette vidéo 7, à l'intérieur du cadre de sélection 75, l'utilisateur appuie sur une touche spécifique de sa télécommande 5, en l'espèce la touche "ok", pour sélectionner la chaîne m lors d'une étape S12.

Sur sélection de la chaîne m par l'utilisateur, la STB 2 envoie au DSLAM
- une demande d'arrêt de la réception du flux principal Fₚ(k) de débit supérieur de la chaîne k, en utilisant une commande IGMP "LEAVE", lors d'une étape S13,
- puis une demande de réception du flux principal Fₚ(m) de débit supérieur de la chaîne m, en utilisant une commande IGMP "JOIN", lors d'une étape S14.

La STB 2 cesse alors de recevoir le flux principal Fₚ(k) de débit supérieur de la chaîne k puis, lors d'une étape S15, reçoit le flux principal Fₚ(m) de débit supérieur de la chaîne m demandée.

Lors d'une étape S16, la STB 2 décode et désembrouille le flux principal Fₚ(m) de la chaîne m avant de le transmettre au dispositif d'affichage 4. Lors d'une étape S17, le dispositif d'affichage 4 affiche le flux principal Fₚ(m) de la chaîne m sur l'écran 6, à la place du flux principal Fₚ(k) de la chaîne k Le bandeau de navigation 7 cesse alors de s'afficher à l'écran 6.

Les étapes du procédé précédemment décrit sont exécutées par un dispositif informatique, en l'espèce un dispositif de réception et de décodage, sous la commande d'instructions logicielles.

Dans l'exemple de réalisation qui vient d'être décrit, la STB 2 envoie une demande de réception du flux de débit supérieur de la chaîne m, une fois que celle-ci a été sélectionnée par l'utilisateur. En variante, on pourrait envisager d'envoyer une demande de réception du flux de débit supérieur de la chaîne m dès que la vignette contenant le flux secondaire de la chaîne m est placée en correspondance avec le moyen de sélection, autrement dit dans le cadre de sélection 75, avant même sélection par l'utilisateur de la chaîne m. Grâce à cela, le basculement de la chaîne k à la chaîne m s'effectue plus rapidement du point de vue de l'utilisateur. On pourrait également prévoir d'envoyer d'une demande de réception du flux principal de débit supérieur de la chaîne voisine précédant la chaîne m et/ou de la chaîne voisine suivant la chaîne m, lorsque la vignette de la chaîne m est positionnée dans le cadre de sélection 75.

Entre l'instant de sélection de la chaîne m et l'instant de visualisation sur l'écran du flux principal de cette chaîne m, on peut prévoir d'agrandir la vignette de visualisation du flux secondaire de débit inférieur de la chaîne m, comme représenté sur la figure 4. Dans ce cas, on peut prévoir de cesser l'affichage de la chaîne m de débit inférieur seulement une fois que la STB 2 est prête à envoyer le flux de la chaîne m de débit supérieur, décodé et désembrouillé, au dispositif d'affichage 4.

Enfin, lorsque la vignette d'une chaîne est positionnée dans le cadre de sélection 75, on pourrait prévoir d'afficher une zone d'information contenant des informations de programme correspondant au programme en cours de cette chaîne. Ces informations de programme peuvent comprendre le titre, le type, les horaires du programme ou autres informations de ce type.

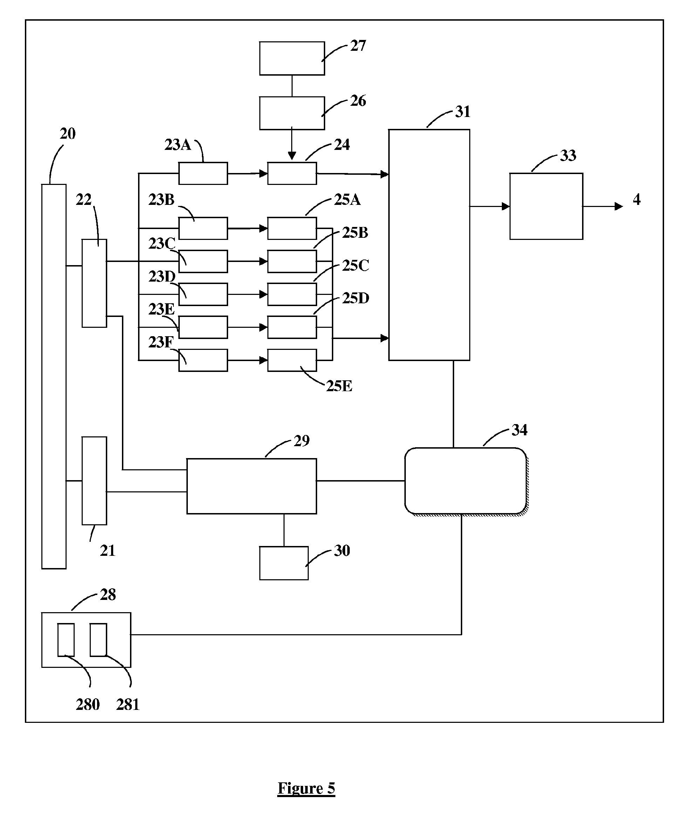

On va maintenant décrire de façon plus détaillée la STB 2, en référence à la figure 5.

La STB 2 comprend
- une interface 20 de connexion à la passerelle de connexion Internet 1;
- un module d'émission 21 et un module de réception 22, connectés à l'interface de connexion 20;
- N+1 modules de démultipexage 23A-23F, connectés au module de réception 22 (N étant ici égal à cinq),;
- un module 24 de décodage d'un flux principal de chaîne de débit supérieur,
- N modules 25A-25E de décodage de N flux secondaires de chaîne de débits inférieurs (N étant ici égal à cinq);
- un module de désembrouillage 26, auquel sont connectés les modules de décodage 24 et 25A-25E,
- un lecteur de carte à puce 27, connecté au module de désembrouillage 28,
- un module IR 28 comprenant un récepteur infrarouge 280 et un bloc 281 d'interprétation de commandes infrarouges en provenance de la télécommande 5;
- un module 29 de gestion de la réception de flux multicast, apte à mettre en oeuvre le protocole IGMP,
- une mémoire 30 contenant un plan de service des chaînes TV du bouquet de chaînes auquel l'utilisateur est abonné,
- un module de planification vidéo 31 du signal audio, vidéo et graphique à transmettre au dispositif d'affichage 4,
- un module 32 de transmission d'un signal audio et vidéo vers le dispositif d'affichage 4,
- une unité centrale de commande 33 à laquelle tous les éléments de la STB 2 sont connectés et destinée à en commander le fonctionnement.

Lorsque l'utilisateur regarde la chaîne k, le module de réception 22 est agencé pour recevoir un signal de données audio et vidéo comprenant le flux principal de débit supérieur de la chaîne k et les cinq flux secondaires de débit inférieur des chaînes k-2, k-1, k, k+1, k+2, et pour transmettre ce signal au module de démultiplexage 23.

Les différents modules de démultipexage 23A-23F sont respectivement connectés aux différents modules de décodage 24 et 25A-25E. Chaque module de démultiplexage 23A-23F est agencé pour recevoir un flux multicast d'une chaîne (flux principal de la chaîne k pour le module 23A, et les cinq flux secondaires des chaînes k-2, k-1, k, k+1, k+2 respectivement pour les modules 23B, 23C, 23D, 23E, 23F) et pour en extraire des informations nécessaires au décodage et au désembrouillage: informations vidéo (PID vidéo), informations audio (PID audio), informations de désembrouillage. Les informations vidéo et audio sont fournies au module de décodage connecté au module de démultiplexage considéré et les informations de désembrouillage au module de désembrouillage 26.

Le module de désembrouillage 26 est agencé pour désembrouiller les différents flux décodés à la sortie des modules de décodage 24, 25A-25E, à l'aide d'une clé de déchiffrement mémorisée dans une carte à puce introduite dans le lecteur 27.

Le module 28 est agencé pour recevoir des signaux infrarouges en provenance de la télécommande 5, pour interpréter, convertir ces signaux en commandes et pour transmettre ces commandes à l'unité centrale 34.

Le module 29 de gestion de la réception de flux multicast est agencé pour s'abonner et de désabonner à des flux multicast (de débit inférieur ou de débit supérieur), en utilisant le protocole IGMP. Il s'agit en définitive d'un driver IGMP.

La mémoire 30 contient le plan de service des chaînes du bouquet TV auquel l'utilisateur est abonné. Ce plan de service, ou "PSD", fournit tous les paramètres nécessaires pour s'abonner ou se désabonner d'un flux multicast (de débit supérieur ou de débit inférieur), notamment l'adresse IP et le port logiciel pour accéder à ce flux multicast. On notera que pour, une chaîne donnée, le PSD fournit des paramètres relatifs au flux principal de débit supérieur de la chaîne considérée ainsi que des paramètres relatifs au flux secondaire de débit inférieur de la chaîne considérée. Le flux principal de débit supérieur et le flux secondaire de débit inférieur relatifs à une même chaîne constituent deux flux multicast distincts auxquels sont associés deux couples respectifs distincts d'adresse IP et de port.

Le module de planification vidéo 31 comprend un processeur graphique. Il a pour rôle d'établir un plan vidéo à partir des six flux fournis par les modules de décodages 24 et 25A-25E, en fonction de paramètres de configuration prédéfinis (position et constitution de la zappette, son utilisé, éléments graphiques ajoutés, etc.) et de contrôler l'affichage sur un écran, ici l'écran 6. Il est donc destiné à planifier le signal vidéo, audio et graphique à transmettre au dispositif d'affichage 4 et à contrôler l'affichage sur l'écran 6. Le module de planification vidéo 31 est adapté pour commander toutes les étapes précédentes décrites liées à l'affichage sur l'écran 6, notamment les étapes S2, S3, S4, S6, S7, S10, S11 et S12. Il intègre une fonction de "Picture-In-Picture" adaptée pour insérer les flux secondaires de débits inférieurs dans le flux principal de la chaîne visualisée à l'écran 6 à des emplacements respectifs différents.

Le module 31 a pour fonction de construire et de contrôler le bandeau de navigation (ou zappette vidéo) 7, de commander un déplacement des vignettes du bandeau de navigation 7 et de gérer la sélection de l'une des vignettes sur commande d'un utilisateur.. Le module de planification vidéo est agencé pour commander l'affichage concomitant du flux principal de la chaîne d'origine et d'une zone de navigation contenant N éléments de visualisation des N flux secondaires sur l'écran 6. Il est également agencé pour, sur commande d'un utilisateur, commander un déplacement des vignettes de visualisation par rapport au cadre de sélection 75 dans la zone de navigation 7 et pour sélectionner l'une des vignettes, placée dans le cadre de sélection 75. Il est également agencé pour commander la sélection d'une chaîne cible après que l'élément de visualisation du flux secondaire de la chaîne cible a été placé en correspondance avec le cadre de sélection 75. En outre, le module 31 est agencé pour commander, entre l'instant de sélection de la chaîne cible m et l'instant de visualisation sur l'écran 6 du flux principal de ladite chaîne cible m, un agrandissement de l'élément de visualisation du flux secondaire de la chaîne cible m à l'écran 6.

Les modules de décodage 24, 25A-25E et le module de planification 31 comprennent des modules logiciels commandant des éléments matériels ou "hardware".

Par conséquent, l'invention concerne également un programme d'ordinateur pour dispositif de réception et de décodage comprenant des instructions logicielles pour faire exécuter le procédé précédemment décrit par ce dispositif lorsque le programme est exécuté par ce dernier. Le programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

Dans la description qui précède, l'équipement d'utilisateur utilise le protocole IGMP pour demander la réception ou l'arrêt d'un flux multicast. On pourrait envisager l'utilisation d'un autre protocole à la place du protocole IGMP.

## Revendications

1. Procédé pour zapper d'une chaîne d'origine (k) à une chaîne cible (m) sur un écran d'affichage (6) à l'aide d'un dispositif de réception télévisuel, comprenant les étapes de
- réception et décodage (S0) d'un flux de données principal de débit supérieur de la chaîne d'origine (k) et visualisation dudit flux principal sur un écran (6) et, concomitamment, réception et décodage (S1) d'un groupe de N flux de données secondaires de débits inférieurs, lesdits N flux secondaires correspondant à un groupe de N chaînes respectives (k-2, k-1, k, k+1, k+2);
- affichage (S6) à l'écran d'une zone de navigation (7) contenant N éléments de visualisation des N flux secondaires, ladite zone de navigation (7) s'affichant à l'écran en même temps que le flux principal de la chaîne d'origine (k);
- déplacement relatif (S7) dans la zone de navigation des éléments de visualisation et d'un moyen de sélection (75), de manière à placer l'élément de visualisation du flux secondaire de la chaîne cible en correspondance avec ledit moyen de sélection.
- après que l'élément de visualisation du flux secondaire de la chaîne cible (m) a été placé en correspondance avec le moyen de sélection (75), sélection (S12) d'une chaîne cible (m),
- envoi (S13) d'une demande de réception d'un flux principal de débit supérieur de la chaîne cible (m) sélectionnée;
- réception et décodage (S15) du flux principal de la chaîne cible (m);
- visualisation (S17) à l'écran (6) du flux principal de la chaîne cible (m), à la place du flux principal de la chaîne d'origine (k),
- et, entre l'instant de sélection de la chaîne cible (m) et l'instant de visualisation sur l'écran (6) du flux principal de ladite chaîne cible (m), agrandissement de l'élément de visualisation du flux secondaire de la chaîne cible (m) à l'écran (6)

2. Procédé selon la revendication 1, dans lequel l'étape d'envoi d'une demande de réception du flux principal de la chaîne cible est exécutée dès que l'élément de visualisation du flux secondaire de ladite chaîne cible (m) est placé en correspondance avec le moyen de sélection (75), avant sélection de ladite chaîne cible (m).

3. Procédé selon la revendication 2, dans lequel, lorsque l'élément de visualisation du flux secondaire de la chaîne cible (m) et le moyen de sélection (75) sont placés en correspondance, il est prévu une étape d'envoi d'une demande de réception d'un flux principal de débit supérieur d'au moins une autre chaîne voisine de la chaîne cible dans la zone de navigation (7).

4. Procédé selon la revendication 1, dans lequel, lorsque l'élément de visualisation du flux secondaire de la chaîne cible (m) et le moyen de sélection (75) sont placés en correspondance, il est prévu une étape d'affichage d'une zone d'information contenant des informations de programme relative à la chaîne cible (m).

5. Dispositif de réception télévisuelle adapté pour zapper d'une chaîne d'origine (k) à une chaîne cible (m), comprenant
- des moyens de réception et de décodage (22, 24) d'un flux principal de débit supérieur d'une chaîne,
- des moyens de réception et de décodage (22, 25A-25E) respectivement d'un groupe de N flux secondaires de débit inférieur d'un groupe de N chaînes, agencés pour recevoir et décoder les N flux secondaires du groupe de N chaînes concomitamment à la réception et au décodage du flux principal d'une chaîne et,
- des moyens (31) de contrôle d'affichage agencés pour commander l'affichage concomitant du flux principal de la chaîne d'origine (k) et d'une zone de navigation contenant N éléments de visualisation des N flux secondaires sur un écran, un déplacement relatif (S7) dans la zone de navigation des éléments de visualisation et d'un moyen de sélection (75), de manière à placer l'élément de visualisation du flux secondaire de la chaîne cible en correspondance avec ledit moyen de sélection, la sélection (S12) d'une chaîne cible (m) après que l'élément de visualisation du flux secondaire de la chaîne cible (m) a été placé en correspondance avec le moyen de sélection (75), et, entre l'instant de sélection de la chaîne cible (m) et l'instant de visualisation sur l'écran (6) du flux principal de ladite chaîne cible (m), un agrandissement de l'élément de visualisation du flux secondaire de la chaîne cible (m) à l'écran (6);
- des moyens (29) pour, suite à l'affichage de la zone de navigation, envoyer une demande de réception d'un flux principal d'une chaîne cible sélectionnée.

6. Programme d'ordinateur sur un support de données comprenant des instructions logicielles pour commander l'exécution des étapes du procédé de la revendication 1, lorsque le programme est exécuté par un ordinateur.
